# FASCICULE DE BREVET EUROPEEN

(11) **EP 2 235 632 B1**
(45) Date de publication et mention de la délivrance du brevet: **27.04.2011**
(21) Numéro de dépôt: 08867303.3
(22) Date de dépôt: 15.12.2008
(51) Int. Cl.: G06F 11/14, G06F 11/08

(54) **SYSTEME SECURISE DE TRANSMISSION DE DONNEES**
GESICHERTES DATENÜBERTRAGUNGSSYSTEM
SECURED SYSTEM FOR DATA TRANSMISSION

(30) Priorité: 21.12.2007 FR 0709059
(43) Date de publication de la demande: 06.10.2010
(73) Titulaire: THALES, 92200 Neuilly-sur-Seine (FR)
(72) Inventeur: AYMERIC, Bruno, F-33160 St Medard En Jalles (FR); EUDELINE, Patrice, F-33000 Bordeaux (FR)
(74) Mandataire: Esselin, Sophie
(86) Numéro de dépôt international: PCT/EP2008/067559
(87) Numéro de publication internationale: WO 2009/083431

(56) Documents cités:
- EP-A- 1 569 118
- US-A- 5 880 982
- PEERCY M ET AL: "FAULT TOLERANT VLSI SYSTEMS" PROCEEDINGS OF THE IEEE, IEEE. NEW YORK, US, vol. 81, no. 5, 1 mai 1993 (1993-05-01), pages 745-758, XP000325295 ISSN: 0018-9219

## Description

Le domaine de l'invention concerne les équipements aéronautiques embarqués réalisant des fonctions critiques. Plus généralement, l'invention concerne tout système sécurisé, c'est-à-dire les systèmes devant démontrer une probabilité de panne faible.

Pour les équipements embarqués notamment dans le domaine aéronautique, il est important de pouvoir démontrer que la probabilité de certains événements est faible. Les événements sont généralement la survenue d'une panne matérielle, ayant pour conséquence un comportement erroné, notamment l'affichage d'une information incorrecte à un pilote par exemple, et la non détection de cette panne.

On ne tolère pour certains de ces évènements qu'une probabilité très faible. Dans le monde aéronautique, cette probabilité est exprimée en nombre d'événements par heure de vol. Pour les évènements les plus critiques, on doit démontrer une probabilité inférieure à 10⁻⁹/heure. De plus, pour ce genre d'événement, on ne tolère pas qu'une panne simple puisse créer l'effet redouté. Par exemple, si la panne d'un seul composant électronique particulier peut créer l'affichage erroné d'une information, et que la probabilité de cet événement est de l'ordre de 10⁻⁷/heure, alors le design sera rejeté par les autorités de certification.

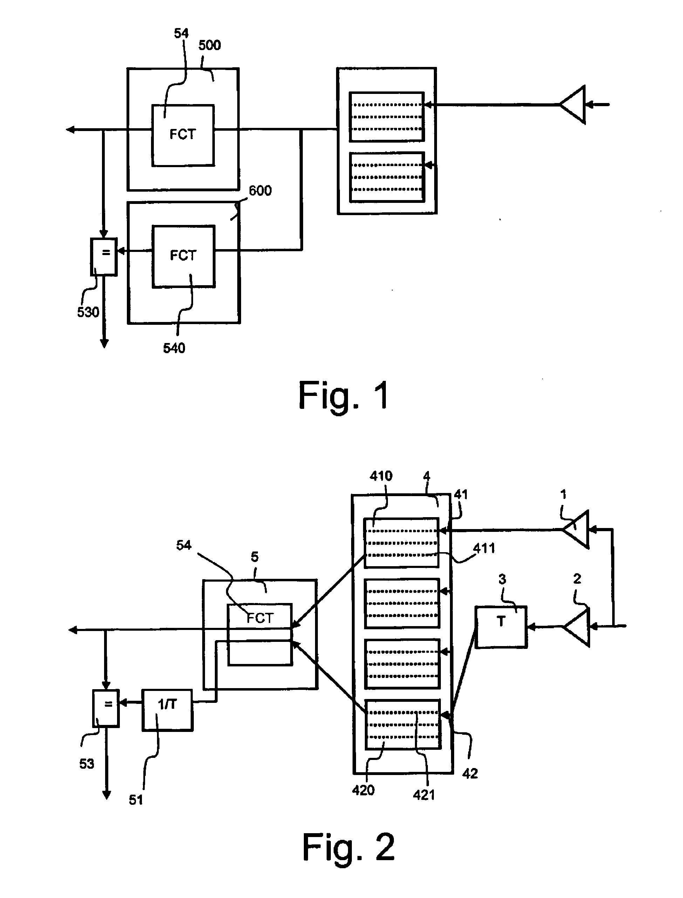

L'art existant consiste alors à dupliquer les chaînes de calculs comme illustré sur la figure 1. Par exemple, une chaîne effectue le calcul 540 réalisé par un calculateur 500 pour fournir la fonction désirée, l'affichage d'une information au pilote, l'autre chaîne effectue le même calcul 540 réalisé par un autre calculateur 600 pour s'assurer que la première chaîne fonctionne correctement. La première chaîne est habituellement appelée COM pour commande, l'autre MON pour Monitoring. Si la chaîne MON détecte une erreur par un moyen de comparaison 530 des données résultats, elle a généralement autorité pour désactiver la chaîne COM. Elle peut aussi forcer un affichage pour alerter les pilotes, ou les opérateurs dans un cas plus général.

La fonction de la chaîne MON est généralement double. D'une part, elle sécurise les calculs qui sont effectués par la chaîne COM mais elle doit également sécuriser les données d'entrées que la chaîne COM a prises en compte pour effectuer ses calculs.

On peut aujourd'hui démontrer qu'une simple chaîne matérielle permet d'obtenir un calcul sécurisé. En effet, les architectures actuelles incluent:
- Des méthodes robustes de partage du temps microprocesseur ainsi que des mémoires.
- Des mécanismes de détection et correction d'erreur sur les mémoires permettant de garantir qu'une information stockée en mémoire ne sera pas corrompue.

Alors, sous réserve que la chaîne MON effectue un calcul dissimilaire par rapport à la chaîne COM, et que les ressources mémoires utilisées soient différentes on peut démontrer que la fonction MON peut utiliser le même micro-processeur que la chaîne COM.

Pour obtenir une réelle mono-chaîne matérielle, il reste alors à sécuriser les données d'entrées du calcul. Mais le problème reste lorsqu'une panne matérielle survient. En effet, cette panne ne doit pas causer une erreur dans le calcul de la chaîne COM qui ne serait pas détectée par la chaîne MON. On pourrait alors penser à simplement dupliquer l'électronique d'acquisition des données d'entrées. Le problème est que lorsque COM et MON sont abrités par le même microprocesseur, il est extrêmement difficile de démontrer qu'une panne particulière ne pourra pas donner le même effet sur les deux calculs. En effet, il se pourrait que le même bit d'un registre de donnée soit erroné pour que la donnée d'entrée sur COM et MON soit identique mais erronée.

On connaît le document de PEERCY M et AL: « FAULT TOLERANT VLSI SYSTEMS » PROCEEDINGS OF THE IEEE, May 1993, numéro 5, pages 745-758. Ce document décrit des techniques de détection d'erreur pour des calculateurs basée sur la redondance temporelle. Ce document ne décrit pas la connexion en série des ressources matérielles utilisée par la deuxième chaîne de calcul dans la présente invention.

Plus précisément, l'invention concerne une chaîne de traitement de données selon la revendication 1, ainsi qu'un procédé selon la revendication 5.

Par ces dispositions, l'invention atteint bien les buts qu'elle s'est fixée :
- Une panne du mécanisme d'adressage du moyen d'acquisition sera détectée ;
- Une panne du mécanisme de décodage du moyen d'acquisition sera détectée ;
- Le microprocesseur exécute des calculs dissimilaires sur des données provenant de zones mémoires différentes ; une panne du microprocesseur et du contrôleur mémoire aura alors des effets différents sur les deux chaînes. La chaîne de monitoring détectera donc la panne.

On entend par le terme de chaîne de traitement l'ensemble des moyens électroniques connectés en série au travers desquels les données sont transmises, ces moyens électroniques étant, non exclusivement, le moyen d'acquisition, le moyen de transformation, la mémoire, le moyen de calcul, le moyen de compensation de transformation et de comparaison des données.

La chaîne de traitement selon l'invention présente de nombreux avantages parmi lesquels :
- Les données d'entrée ainsi que les calculs de la première chaîne sont sécurisés par la deuxième chaîne de calcul;
- La chaîne de calcul sécurisée est entièrement mono-chaîne matérielle entraînant une réduction des ressources matérielles nécessaires et donc une réduction de la consommation, du coût et de la masse des équipements embarqués concernés.

L'invention sera mieux comprise et d'autres avantages apparaîtront à la lecture de la description qui va suivre donnée à titre non limitatif et grâce aux figures annexées parmi desquelles :
La figure 1 représente selon l'art antérieur une chaîne de calcul sécurisée par duplication matérielle.
La figure 2 représente une chaîne de calcul sécurisée selon l'invention.
La figure 3 représente un mode de mise en oeuvre de l'invention.

L'homme du métier connaît bien le principe de sécurisation des dispositifs comme illustrés par la figure 1. La chaîne de calcul est dupliquée matériellement, utilisant deux microprocesseurs 500 et 600, pour détecter les éventuelles pannes matérielles du microprocesseur 500. Le résultat de la première chaîne de calcul doit être validé par le résultat de la seconde chaîne.

A titre d'exemple non limitatif, la figure 2 représente une chaîne de traitement de données du standard « ARINC 429 » d'un équipement embarqué selon l'invention.

Pour rappel, le bus ARINC 429 est un standard développé spécifiquement pour le domaine de l'aéronautique. Le principe de ce bus de données est connu de l'homme du métier. L'ARINC 429 est basé sur un transfert série de mots de 32bits. Sur ces 32 bits, 8 bits sont réservés au codage d'un numéro de label, chaque label correspondant à un type d'information, 2 bits à un statut, (valeur valide, non calculée, en erreur), 1 bit pour un contrôle de parité, les autres pouvant être utilisés pour encoder de l'information.

La chaîne de traitement selon l'invention de la figure 2 utilise un unique microprocesseur 5 réalisant une fonction de calcul 54. Pour réaliser la fonction le microprocesseur doit récupérer les données à calculer dans des espaces mémoires pouvant être répartis en plusieurs ressources mémoires. La chaîne de traitement de données comporte un moyen d'acquisition des données 4 comprenant des liaisons d'entrées 41 et 42.

Le moyen d'acquisition 4 est un circuit permettant de dé-sérialiser les données de type ARINC 429 provenant des bus série 41 et 42. Ces liaisons d'entrée peuvent être connectées à d'autres équipements embarqués communiquant avec des bus ARINC 429. Le circuit 4 est capable de gérer simultanément une cinquantaine de liaisons d'entrées/sorties. Les liaisons d'entrées comportent des circuits de démodulation 1 et 2 de bus ARINC 429. Le circuit 4 fonctionne sur la base d'une détection du numéro de label et enregistrement de la valeur codée dans une mémoire allouée spécialement à chaque label. Les mémoires 410, 420 sont matériellement différentes et non intégrées au circuit 4. Le circuit de dé-sérialisation 4 adresse les données provenant de liaisons distinctes 41 et 42 à des blocs mémoires distincts. Les données étant également enregistrées à des adresses mémoire distinctes lorsque les labels sont différents.

La première chaîne de calcul comprend le démodulateur 1 connecté à l'entrée 41 du circuit de dé-sérialisation 4. Une première donnée d'entrée est alors enregistrée dans un bloc mémoire 410 à une adresse 411. Cette adresse mémoire est adressée par le micro-processeur 5 pour récupérer la donnée en vue d'être calculée par une fonction 54. Cette fonction fournit ensuite une première donnée résultat.

Afin de prouver que la fiabilité de cette chaîne de calcul respecte les contraintes aéronautiques, une deuxième chaîne de calcul est associée à cette première chaîne de calcul. Cette deuxième chaîne de calcul comporte un démodulateur 2, un moyen de transformation de données 3 connecté à une autre liaison d'entrée 42 du circuit 4. La donnée en entrée du moyen de transformation de donnée 3 est la même que la donnée en entrée de la première chaîne de calcul.

Avantageusement, le moyen de transformation modifie la donnée d'entrée en une deuxième donnée, le label de la deuxième donnée devenant un label dissimilaire de la donnée d'entrée de façon que le moyen d'acquisition 4 adresse la deuxième donnée à une adresse mémoire différente de celle de la première donnée.

Avantageusement, le moyen de transformation modifie la première donnée d'entrée en une deuxième donnée, l'information de la deuxième donnée devenant une information dissimilaire de l'information de la première donnée d'entrée.

La conséquence est que la même donnée d'entrée est enregistrée directement par la première chaîne de calcul et indirectement par la deuxième chaîne de calcul via le moyen de transformation des données 3:
- Dans deux blocs mémoires différents 410 et 420 car provenant de liaisons d'entrées 41 et 42 distinctes ;
- Dans chaque bloc 410 et 420, à des adresses 411 et 421 nettement différentes puisque le numéro de label est différent ;
- En codage transformé dans un des deux blocs.

Les modes de pannes du moyen d'acquisition dans les mémoires peuvent être:
- Panne d'un mécanisme d'adressage (le bit est bloqué dans un état) : évènement entraînant l'écrasement d'une certaine adresse d'un certain bloc par une donnée qui aurait du être stockée ailleurs. Le même écrasement ne pourra pas se produire sur le même bloc, car les données arrivent sur le moyen d'acquisition par des liaisons d'entrée distinctes, et sur la même adresse, car la donnée transformée possède un label différent. La donnée d'entrée directe et la donnée transformée ne seront alors plus compatibles l'une de l'autre.
- Panne d'un mécanisme de décodage : évènement entraînant le forçage d'un bit de donnée. La conséquence n'est pas la même sur les deux chaînes La donnée directe et la donnée transformée ne seront plus compatibles l'une de l'autre.

La chaîne de monitoring devra donc prendre en entrée du calculateur 5 des données transformées, compenser la transformation par le moyen 51, et utiliser ces données pour valider les calculs de la chaîne COM avec un moyen de comparaison 53. La chaîne MON exécute la même fonction sur une donnée différente de la chaîne COM. Le calculateur 5 exécute donc un calcul différent pour les deux chaînes. N'importe quelle panne au niveau du microprocesseur ou du contrôleur mémoire (bit forcé à 1 ou 0 par exemple) aura alors un effet différent sur les deux chaînes. La chaîne de monitoring détectera donc le problème.

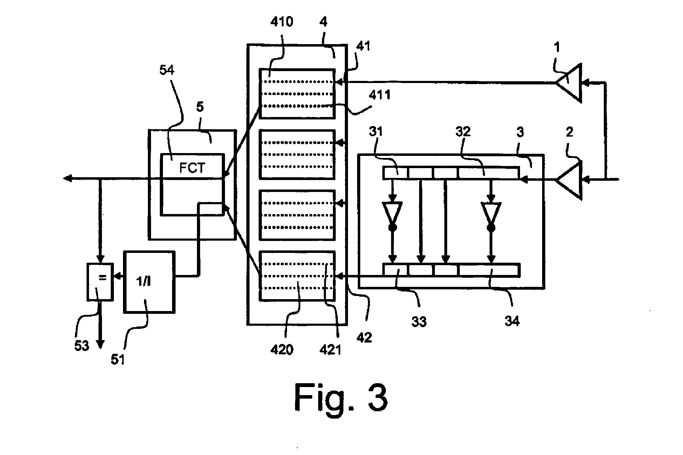

Dans un mode de mise en oeuvre illustré en figure 3, le moyen de transformation 3 des données d'entrée est un inverseur de données et le moyen de compensation de transformation 51 compense l'effet de l'inverseur de données, l'inversion consistant à transformer un bit « 0 » en bit « 1 » et réciproquement :
- Le moyen d'inversion 3 des données a sa sortie connectée à une seconde entrée 42 du moyen d'acquisition de données 4 ;
- Le calculateur 4 récupère la donnée inversée dans la mémoire 420 et fournit une donnée résultat inversée ;
- Le moyen de compensation 51 compense l'inversion sur la donnée résultat inversée et fournit une deuxième donnée résultat ;
- Le moyen de comparaison 53 de la deuxième chaîne teste la première donnée résultat avec la deuxième donnée résultat et déclenche une alerte en cas de non concordance des données résultat.

Les données d'entrée du bus ARINC 429 sont transformées dans un inverseur avant d'être enregistrées dans la mémoire 420. Une donnée d'entrée comporte un champ de label 31 et un champ 32 contenant l'information à décoder. Dans ce mode de mise en oeuvre, il suffit d'inverser ces deux champs. Le label de la donnée arrivant sur la liaison d'entrée 42 devient ainsi totalement différent du label de la donnée d'entrée arrivant sur la liaison d'entrée 41 du moyen d'acquisition. Les bits de l'information décodée sont aussi en totalité différents; les bits de données étant tous inversés. La fonction d'inversion peut être réalisée facilement sur un circuit reprogrammable de technologie « FPGA », « Field Programmable Gate Array » en langage anglo-saxon.

Dans ce mode de mise en oeuvre, le moyen de transformation 3 est un inverseur de données, transformant un bit « 0 » en un bit « 1 ». Il s'agit de la transformation la plus simple à mettre en oeuvre et nécessite peu de ressources matérielles pour la mise en place. Il est clair toutefois que n'importe quel autre moyen de transformation modifiant les bits de données peut être utilisé. Néanmoins, l'inversion des données est le moyen le plus sûr pour tester la chaîne de calcul car tous les bits de la donnée sont modifiés. Il est possible d'utiliser des fonctions transformant les données partiellement au risque que la panne se situe sur un bit non modifié et par conséquent faisant échouer la détection de l'erreur.

L'invention concerne également un procédé de détection d'erreur d'une chaîne de traitement de donnée, caractérisé en ce que la deuxième chaîne de calcul réalise les étapes suivantes pour valider la première donnée résultat de la première chaîne de calcul:
- à une première étape, transformation de la donnée d'entrée ;
- à une deuxième étape, enregistrement de la donnée transformée dans une mémoire;
- à une troisième étape, lecture de la donnée transformée ;
- à une quatrième étape, calcul de la deuxième donnée résultat ;
- à une cinquième étape, compensation de la transformation, réalisée à la première étape, sur la donnée résultat transformée, étape produisant la deuxième donnée résultat;
- A une sixième étape, comparaison de la première et la deuxième donnée résultat ;
- A une septième étape, si les résultats sont différents, désactivation de la chaîne de calcul et affichage d'une alerte pour l'opérateur.

Ce procédé est remarquable car il permet de détecter une erreur sur une chaîne de calcul dont le principe est basé sur la duplication de la chaîne de calcul tout en utilisant une unique architecture matérielle. La caractéristique du procédé repose sur le fait que les ressources matérielles sont sollicitées pour exécuter des opérations différentes tout en disposant d'un moyen de comparer les résultats des calculs entre eux en fin de chaîne.

Dans le mode de mise en oeuvre illustré à la figure 3, la deuxième chaîne de calcul réalise les étapes suivantes pour valider le résultat de la première chaîne:
- A une première étape, inversion de la donnée d'entrée ;
- A une deuxième étape, enregistrement dans la mémoire d'une deuxième donnée dans une zone mémoire, cette deuxième donnée étant l'inverse de la première donnée d'entrée ;
- A une troisième étape, lecture de la deuxième donnée ;
- A une quatrième étape, calcul de la deuxième donnée résultat;
- A une cinquième étape, compensation de l'inversion sur la seconde donnée résultat;
- A une sixième étape, comparaison de la première donnée résultat et de la seconde donnée résultat ;
- A une septième étape, si les résultats sont différents, désactivation de la chaîne de calcul et affichage d'une alerte pour l'opérateur.

Bien que l'invention soit développée pour une chaîne de traitement de données de bus ARINC 429, il est qu'elle peut être utilisée pour des bus de données de standard différent. Bien que particulièrement adaptée aux systèmes de traitement de données numériques dans le domaine aéronautique, on ne saurait cantonner l'invention à ce domaine d'application. Elle s'applique à tout dispositif devant prouver un taux de panne faible et pourrait donc concerner également des applications spatiales et automobiles. Dans notre exemple, l'invention s'applique à un dispositif d'affichage d'aéronef réalisant des fonctions intervenant pour l'affichage et comportant une chaîne de traitement de données selon l'invention pour réaliser l'une des fonctions. L'invention concerne également tout dispositif embarqué d'aéronef réalisant des fonctions de calculs critiques, comportant une chaîne de traitement de données selon l'invention.

## Revendications

1. Chaîne de traitement de données pour une fonction d'un équipement embarqué d'aéronef comprenant :
- une première chaîne de calcul comportant un calculateur (5) exécutant une fonction sur une première donnée enregistrée dans une mémoire (410) par un moyen d'acquisition (4) et fournissant une première donnée résultat, la première donnée enregistrée étant une donnée d'entrée arrivant sur une première entrée (41) du moyen d'acquisition,
- une deuxième chaîne de calcul exécutant la même fonction que la première chaîne, fournissant une deuxième donnée résultat et comportant un moyen de comparaison (53) des données résultat pour valider le calcul de la première chaîne,
la deuxième chaîne de calcul utilisant les mêmes ressources matérielles que la première chaîne et comportant, connectés en série, un moyen de transformation (3) de la donnée d'entrée, le moyen d'acquisition (4), la mémoire, le calculateur (5), un moyen de compensation de la transformation (51) et le moyen de comparaison (53), de façon que la deuxième chaîne de calcul exécute la fonction sur une deuxième donnée enregistrée dans la mémoire (420), cette deuxième donnée étant la transformée de la donnée d'entrée par le moyen de transformation et étant enregistrée dans la mémoire par le moyen d'acquisition de façon que le calculateur (5) exécute un calcul dissimilaire de la première chaîne de calcul ; le moyen de compensation (51) de transformation permet de comparer les données résultats de la première et la deuxième chaîne de calcul.

2. Chaîne de traitement de données selon la revendication 1 dont les données comportent au moins un label (31) et une information (32), le label permettant au moyen d'acquisition (4) d'identifier la donnée et de l'enregistrer dans une zone mémoire précise, **caractérisée en ce que** le moyen de transformation (3) modifie la donnée d'entrée en une deuxième donnée, l'information (34) de la deuxième donnée devenant une information dissimilaire de l'information (32) de la donnée d'entrée.

3. Chaîne de traitement de données selon la revendication 2 dont les données comportent au moins un label et une information, **caractérisée en ce que** le moyen de transformation modifie la donnée d'entrée en une deuxième donnée, le label (33) de la deuxième donnée devenant un label dissimilaire de celui (31) de la donnée d'entrée de façon que le moyen d'acquisition adresse la deuxième donnée à une adresse mémoire différente de celle de la première donnée enregistrée.

4. Chaîne de traitement selon au moins l'une des revendications 1 à 3, **caractérisée en ce que** le moyen de transformation (3) des données d'entrée est un inverseur de données et que le moyen de compensation (51) de transformation compense l'effet de l'inverseur de données, l'inversion consistant à transformer un bit à « 0 » en bit à « 1 » et réciproquement :
- Le moyen d'inversion des données a sa sortie connectée à une seconde entrée (42) du moyen d'acquisition de données (4) ;
- Le calculateur (5) récupère la donnée inversée dans la mémoire (420) et fournit une donnée résultat inversée ;
- Le moyen de compensation (51) compense l'inversion sur la donnée résultat inversée et fournit une deuxième donnée résultat ;
- Le moyen de comparaison (53) de la deuxième chaîne teste la première donnée résultat avec la deuxième donnée résultat et déclenche une alerte en cas de non concordance des données résultat.

5. Procédé de détection d'erreur d'une chaîne de traitement de donnée selon la revendication 3, **caractérisé en ce que** la deuxième chaîne de calcul réalise les étapes successives suivantes pour valider la première donnée résultat de la première chaîne de calcul:
- à une première étape, transformation de la donnée d'entrée ;
- à une deuxième étape, enregistrement de la donnée transformée dans une mémoire (420);
- à une troisième étape, lecture de la donnée transformée
- à une quatrième étape, calcul de la deuxième donnée résultat à partir de la donnée transformée lue;
- à une cinquième étape, compensation de la transformation, réalisée à la première étape, sur la donnée résultat transformée, étape donnant la deuxième donnée résultat;
- A une sixième étape, comparaison de la première et la deuxième donnée résultat ;
- A une septième étape, si les résultats sont différents, désactivation de la chaîne de calcul et affichage d'une alerte pour l'opérateur.

6. Procédé de détection d'erreur d'une chaîne de traitement de donnée selon la revendication 5, **caractérisé en ce que** la transformation est une inversion des données.

7. Chaîne de traitement de données de type ARINC 429 selon la revendication 4 et réalisant le procédé selon la revendication 6.

8. Dispositif d'affichage d'aéronef réalisant des fonctions intervenant pour l'affichage, **caractérisé en ce qu'**il comporte une chaîne de traitement de données selon la revendication 4 pour réaliser l'une des fonctions.

9. Dispositif embarqué d'aéronef réalisant des fonctions de calcul critiques, **caractérisé en qu'**il comporte une chaîne de traitement de données selon la revendication 4 pour réaliser l'une des fonctions.

## Claims

1. A data processing chain for a function of an item of aircraft onboard equipment, comprising:
- a first calculation chain comprising a processor (5) executing a function on a first item of data recorded in a memory (410) by an acquisition means (4) and providing first result data, the first recorded data being an input data arriving at a first input (41) of the acquisition means,
- a second calculation chain executing the same function as the first chain, providing second result data and comprising a means for comparing (53) the result data in order to confirm the calculation of the first chain,
the second calculation chain using the same hardware resources as the first chain and comprising, connected in series, a means for transforming (3) the input data, the acquisition means (4), the memory, the processor (5), a means for compensating the transformation (51) and the comparison means (53), so that the second calculation chain executes the function on the second data recorded in the memory (420), this second data being the product of transformation of the input data by the transformation means and being recorded in the memory by the acquisition means so that the processor (5) executes a calculation dissimilar to the first calculation chain; the means for compensating (51) the transformation allowing the comparison of the result data of the first and second calculation chains.

2. The data processing chain according to claim 1, in which the data includes at least one label (31) and one item of information (32), the label allowing the acquisition means (4) to identify the data and to record said data in a precise memory zone, **characterised in that** the transformation means (3) modifies the input data into second data, the information (34) of the second data becoming information dissimilar to the information (32) of the input data.

3. The data processing chain according to claim 2, in which the data includes at least one label and one item of information, **characterised in that** the transformation means modifies the input data into second data, the label (33) of the second data becoming a label dissimilar to that (31) of the input data so that the acquisition means addresses the second data at a memory address different to that of the first recorded data.

4. The data processing chain according to at least one of claims 1 to 3, **characterised in that** the transformation means (3) of the input data is a data inverter and **in that** the means for compensating (51) the transformation compensates the effect of the data inverter, the inversion consisting in transforming a "0" bit into a "1" bit and vice versa:
- the means for inverting data has its output connected to a second input (42) of the data acquisition means (4);
- the processor (5) gathers the data inverted in the memory (420) and provides an inverted result data;
- the compensation means (51) compensates the inversion on the inverted result data and provides second result data;
- the means for comparing (53) the second chain tests the first result data with the second result data and triggers an alarm if the result data do not agree.

5. A process for detecting errors in a data processing chain according to claim 3, **characterised in that** the second calculation chain performs the following successive steps in order to confirm the first result data of the first calculation chain:
- a first step of transforming the input data;
- a second step of recording the transformed data in a memory (420);
- a third step of reading the transformed data;
- a fourth step of calculating the second result data from the read transformed data;
- a fifth step of compensating the transformation, undertaken during the first step, on the transformed result data, which step provides the second result data;
- a sixth step of comparing the first and the second result data;
- a seventh step, if the results differ, of deactivating the calculation chain and displaying an alarm for the operator.

6. The process for detecting errors in a data processing chain according to claim 5, **characterised in that** the transformation is a data inversion.

7. An ARINC 429 type data processing chain according to claim 4 and performing the process according to claim 6.

8. An aircraft display device performing the functions required for the display, **characterised in that** it comprises a data processing chain according to claim 4 for performing one of the functions.

9. A device onboard an aircraft for performing critical calculation functions, **characterised in that** it includes a data processing chain according to claim 4 for performing one of the functions.

## Patentansprüche

1. Datenverarbeitungskette für eine Funktion eines Geräts an Bord eines Luftfahrzeugs, die Folgendes umfasst:
- eine erste Rechenkette, die einen Rechner (5) umfasst, der eine Funktion an einem ersten Datenelement ausführt, das von einem Erfassungsmittel (4) in einem Speicher (410) aufgezeichnet wurde und erste Ergebnisdaten liefert, wobei die ersten aufgezeichneten Daten Eingangsdaten sind, die an einem ersten Eingang (41) des Erfassungsmittels ankommen,
- eine zweite Rechenkette, die dieselbe Funktion ausführt wie die erste Kette und zweite Ergebnisdaten liefert und ein Mittel zum Vergleichen (53) der Ergebnisdaten umfasst, um die Berechnung der ersten Kette zu überprüfen,
wobei die zweite Rechenkette dieselben Hardware-Ressourcen benutzt wie die erste Kette und in Reihe geschaltet Folgendes umfasst: ein Mittel zum Transformieren (3) der Eingangsdaten, das Erfassungsmittel (4), den Speicher, den Rechner (5), ein Mittel zum Kompensieren der Transformation (51) und das Vergleichsmittel (53), so dass die zweite Rechenkette die Funktion an zweiten im Speicher (420) aufgezeichneten Daten ausführt, wobei diese zweiten Daten das Transformationsprodukt der Eingangsdaten sind, die vom Transformationsmittel transformiert und vom Erfassungsmittel im Speicher aufgezeichnet wurden, so dass der Rechner (5) eine Rechnung ausführt, die der ersten Rechenkette unähnlich ist; wobei das Mittel zum Kompensieren (51) der Transformation einen Vergleich der Ergebnisdaten der ersten und der zweiten Rechenkette zulässt.

2. Datenverarbeitungskette nach Anspruch 1, wobei die Daten wenigstens ein Etikett (31) und eine Information (32) enthalten, wobei es das Etikett dem Erfassungsmittel (4) gestattet, die Daten zu identifizieren und sie in einer präzisen Speicherzone aufzuzeichnen, **dadurch gekennzeichnet, dass** das Transformationsmittel (3) die Eingangsdaten in zweite Daten ändert, wobei die Informationen (34) der zweiten Daten zu Informationen werden, die den Informationen (32) der Eingangsdaten unähnlich sind.

3. Datenverarbeitungskette nach Anspruch 2, wobei die Daten wenigstens ein Etikett und eine Information enthalten, **dadurch gekennzeichnet, dass** das Transformationsmittel die Eingangsdaten in zweite Daten ändert, wobei das Etikett (33) der zweiten Daten zu einem Etikett wird, das dem (31) der Eingangsdaten unähnlich ist, so dass das Erfassungsmittel die zweiten Daten auf eine Speicheradresse adressiert, die sich von der der ersten aufgezeichneten Daten unterscheidet.

4. Datenverarbeitungskette nach einem der Ansprüche 1 bis 3, **dadurch gekennzeichnet, dass** das Transformationsmittel (3) der Eingangsdaten ein Dateninverter ist, und **dadurch**, dass das Mittel zum Kompensieren (51) der Transformation den Effekt des Dateninverters kompensiert, wobei die Inversion im Transformieren eines "0" Bits in ein "1" Bit und umgekehrt besteht:
- der Ausgang des Dateninversionsmittels ist mit einem zweiten Eingang (42) des Datenerfassungsmittels (4) verbunden;
- der Rechner (5) sammelt die im Speicher (420) invertierten Daten und stellt invertierte Ergebnisdaten bereit;
- das Kompensationsmittel (51) kompensiert die Inversion an den invertierten Ergebnisdaten und stellt zweite Ergebnisdaten bereit;
- das Vergleichsmittel (53) der zweiten Kette testet die ersten Ergebnisdaten mit den zweiten Ergebnisdaten und löst einen Alarm aus, wenn die Ergebnisdaten nicht übereinstimmen.

5. Verfahren zum Erkennen von Fehlern in einer Datenverbeitungskette nach Anspruch 3, **dadurch gekennzeichnet, dass** die zweite Rechenkette die folgenden aufeinander folgenden Schritte ausführt, um die ersten Ergebnisdaten der ersten Rechenkette zu validieren:
- einen ersten Schritt des Transformierens der Eingangsdaten;
- einen zweiten Schritt des Aufzeichnens der transformierten Daten in einem Speicher (420);
- einen dritten Schritt des Lesens der transformierten Daten;
- einen vierten Schritt des Berechnens der zweiten Ergebnisdaten anhand der gelesenen transformierten Daten;
- einen fünften Schritt des Kompensierens der im ersten Schritt durchgeführten Transformation an den transformierten Ergebnisdaten, wobei dieser Schritt die zweiten Ergebnisdaten ergibt;
- einen sechsten Schritt des Vergleichens der ersten und zweiten Ergebnisdaten;
- einen siebten Schritt, falls sich die Ergebnisse unterscheiden, des Deaktivierens der Rechenkette und des Anzeigens eines Alarms für den Bediener.

6. Verfahren zum Erkennen von Fehlern in einer Datenverbeitungskette nach Anspruch 5, **dadurch gekennzeichnet, dass** die Transformation eine Dateninversion ist.

7. Datenverarbeitungskette des Typs ARINC 429 nach Anspruch 4 und Ausführen des Verfahrens nach Anspruch 6.

8. Luftfahrzeuganzeigegerät zum Ausführen der zur Anzeige benötigten Funktionen, **dadurch gekennzeichnet, dass** es eine Datenverarbeitungskette nach Anspruch 4 zum Ausführen einer der Funktionen umfasst.

9. Gerät an Bord eines Luftfahrzeugs zum Ausführen von kritischen Rechenfunktionen, **dadurch gekennzeichnet, dass** es eine Datenverarbeitungskette nach Anspruch 4 zum Ausführen von einer der Funktionen umfasst.
